# EUROPÄISCHE PATENTSCHRIFT

(11) **EP 1 607 666 B1**
(45) Veröffentlichungstag und Bekanntmachung des Hinweises auf die Patenterteilung: **05.10.2011**
(21) Anmeldenummer: 05012992.3
(22) Anmeldetag: 16.06.2005
(51) Int. Cl.: F16L 3/22

(54) **Montageclip zur Befestigung von Leitungen an einem Kraftfahrzeug-Unterbau, sowie Verfahren zur Montage derselben mit dem Montageclip**
A clip for fastening pipes on the structure a of a car and a pipe mounting method with the clip
Un clip de fixation des tuyaux sur une structure d'une voiture et un procédé pour fixer les tuyaux avec le clip

(30) Priorität: 19.06.2004 DE 102004029739
(43) Veröffentlichungstag der Anmeldung: 21.12.2005
(73) Patentinhaber: GM Global Technology Operations LLC, Detroit, MI 48265-3000 (US)
(72) Erfinder: Geier, Peter, 65460 Riedstadt (DE); Glock, Jochen, 64560 Riedstadt-Erfelden (DE)
(74) Vertreter: Strauss, Peter

(56) Entgegenhaltungen:
- EP-A- 0 597 718
- EP-A- 0 599 662
- EP-A1- 0 379 860
- DE-A1- 3 047 462
- DE-A1- 3 738 720
- DE-A1- 19 953 834
- DE-U1- 20 102 930

## Beschreibung

Die Erfindung betrifft einen Montageclip zur Befestigung von Leitungen, wie beispielsweise Bremsleitungen, Kraftstoffleitungen oder dergleichen, am Unterbau eines Kraftfahrzeugs, nach dem Oberbegriff des Anspruchs 1, sowie ein Verfahren zur Montage von Leitungsbündeln mit diesem erfindungsgemäßen Montageclip.

Aus der EP 0 597 781 A1 ist ein Schlauchhalter bekannt mit einem mutternartigem Bauteil zur Befestigung des Schlauchhalters an einer Basis mit einem daran vorgesehenen Gewindebolzen eines Kraftfahrzeuges bekannt. Die Merkmale des Oberbegriffs des Anspruch 1 sind aus dieser Schrift bekannt.

Aus der Praxis ist ein weiterer solcher Montageclip zur Befestigung von im Bündel vorliegenden Leitungen, wie beispielsweise Bremsleitungen, Kraftstoffleitungen oder dergleichen, am Unterbau eines Kraftfahrzeugs, insbesondere eines Personenkraftwagens bekannt geworden. Dieser aus der Praxis bekannte Montageclip weist Ausnehmungen zur Aufnahme der Leitungen auf, wobei die Leitungen in die Ausnehmungen hinein geschoben werden, dort einrasten und durch Rastnasen gegen ein versehentliches Herausfallen gesichert sind. Der bekannte Montageclip weist sechs Ausnehmungen zur Aufnahme von bis zu sieben Leitungen auf. Die Ausnehmungen sind näherungsweise "U"-förmig ausgebildet und mit dem offenen Ende des "U" zum Unterbau hin ausgerichtet.

Der aus der Praxis bekannte Montageclip verfügt über eine Durchgangsöffnung bzw. Durchgangsbohrung zum Verschrauben des Montageclips mit einer Blechtreibschraube am Unterbau des Kraftfahrzeugs. Der Montageclip liegt im montierten Zustand mit einer Flanke bündig am Kraftfahrzeug-Unterbau an und erstreckt sich dabei parallel zum Unterbau, wobei die Durchgangsöffnung im wesentlichen senkrecht dazu orientiert ist. Durch die Durchgangsbohrung kann die Blechtreibschraube hindurch gesteckt und in den Unterbau selbstschneidend hineingetrieben werden, um den Montageclip damit am Unterboden zu befestigen.

Bei dem bekannten Montageclip sind Hilfsmittel vorgesehen, um die von der Blechtreibschraube selbst geschnittene Bohrung im Unterboden im verschraubten Zustand abzudichten. Dabei hat sich wiederholt gezeigt, dass diese Abdichtung nicht dauerhaft zuverlässig dicht ist.

Zwischen dem Montageclip und dem Unterbau ist eine Messinghülse plaziert, durch welche die Blechtreibschraube, die durch die Durchgangsöffnung durch den Montageclip hindurch geführt wird, hindurch tritt, bevor die Blechtreibschraube in den Unterbau eindringt. Die Messinghülse dient als Abstandshalter zwischen Montageclip und Unterbau, als definierter Anschlag für den Montageclip und zur Versteifung der Kombination aus Montageclip, Blechtreibschraube und Unterbau im verschraubten Zustand, um ein Verkippen oder Verkanten zu vermeiden. Ferner soll die Messinghülse Setzungen ausgleichen, um ein Loslösen der Blechtreibschraube beim Betrieb des Fahrzeugs zu vermeiden.

Nachteilig bei diesem bekannten Montageclip ist jedoch, dass im Falle einer vollautomatischen Verschraubung mit Montagemodulen, Handlingsystemen und Schraubautomaten am laufenden Fertigungsband ein besonders leistungsfähiger Schraubautomat eingesetzt werden muss, der in der Lage sein muss, die Blechtreibschraube selbständig verliersicher zu halten, ausreichend senkrecht zum Unterboden auszurichten, diese exakt und zielsicher in die Durchgangsöffnung einzuführen und durch diese hindurch zu stecken. Der Schraubautomat muss dabei die Blechtreibschraube gegen den Unterbau exakt an der richtigen Stelle kräftig andrücken, ohne dabei zu Verkanten oder Umzukippen, wobei der Schraubautomat die Schraube zugleich permanent verliersicher am Schraubenkopf halten muss, um die Blechtreibschraube letztendlich mit einer komplexen überlagerten, zumindest transversalen und rotatorischen Bewegung erfolgreich in den Unterbau hinein zu treiben.

Weiterhin ist von Nachteil, dass bei dem bekannten Montageclip eine Messinghülse als Abstandshülse, zur Vermeidung bzw. zum Ausgleich von Setzungen und als Stabilisator benötigt wird. Diese Messinghülse ist im Vergleich zum aus Kunststoff hergestellten Montageclip und zur Blechtreibschraube ein relativ teures Bauteil und erhöht damit unnötig die Kosten bei der Montage von Brems- und/oder Kraftstoffleitungen.

Des weiteren ist nachteilig, dass der Kopf der Blechtreibschraube im verschraubten Zustand tief in der Durchgangsöffnung des Montageclips, also im Inneren des Montageclips, zu liegen kommt. Damit kann der fest montierte Montageclip beispielsweise bei einer Zerlegung des Kraftfahrzeugs im Rahmen eines Recycling oder bei Reparaturarbeiten nur schwer wieder gelöst werden, ohne dass der Montageclip dabei versehentlich zu Bruch geht. Dies führt dann zu einem erheblichen Arbeitsaufwand, der gerade bei Reparaturen vom Kunden nicht akzeptiert werden kann. Dieses Problem verstärkt sich noch durch die mit den von den Blechtreibschrauben erzeugten Löchern im Unterbau, die in aller Regel Korrosionsprobleme nach sich ziehen und die auch insoweit eine teure Kundendienstlösung darstellen, wie bei einer De- und Remontage jedesmal die nächst dickere Flowdrillschraube verwendet werden muß, was sich wiederum negativ in den Kosten niederschlägt.

Weiterhin ist von Nachteil, dass die herkömmlichen Blechtreibschrauben der bekannten Montageclipse bei einem zur Ausbildung einer entsprechend steifen und damit sicheren Struktur aus hochfesten Stählen hergestellten Kraftfahrzeugunterbau jüngster Generation nicht mehr zufriedenstellend verwendet werden können. Andere, besser geeignete Blechtreib- bzw. Flowdrill-Schrauben sind jedoch extrem teuer, so dass diese als Alternative aus Kostengründen ausscheiden.

Aufgabe der vorliegenden Erfindung ist es demzufolge, unter Vermeidung der vorstehenden Nachteile, einen Montageclip vorzuschlagen, der einfach, schnell und kostengünstig am Unterbau eines Kraftfahrzeuges verschraubt werden kann. Ein weiterer Aspekt der Erfindung ist, dass mit dem erfindungsgemäßen Montageclip auf die teure Messinghülse wie auch auf die unhandliche Blechtreibschraube verzichtet werden können soll. Ein weiterer Aspekt der Erfindung ist es, ein Verfahren zur Montage der Leitungen unter Verwendung des erfindungsgemäßen Montageclips anzugeben.

Diese Aufgabe wird gelöst durch die Merkmale des Anspruchs 1, wie auch durch die Merkmale des Anspruchs 9.

Dabei wird erstmals ein Montageclip zur Befestigung von beispielsweise im Bündel vorliegenden Leitungen, wie beispielsweise Bremsleitungen, Kraftstoffleitungen oder dergleichen, am Unterbau eines Kraftfahrzeugs, insbesondere eines Personenkraftwagens, vorgeschlagen, mit Ausnehmungen zur Aufnahme der Leitungen und mit einer Durchgangsöffnung zum Verschrauben des Montageclips mit einem Befestigungsmittel am Unterbau des Kraftfahrzeugs, wobei im Montageclip eine Mutter verliersicher drehbar gehalten ist. Am Kraftfahrzeug-Unterbau ist wenigstens ein Montagebolzen, der einen Gewindeabschnitt aufweist, derart befestigt, dass der Montageclip mit dessen Durchgangsöffnung auf dem Befestigungsbolzen aufsteckbar ist.

Der erfindungsgemäße Montageclip zeichnet sich dabei erstmals dadurch aus, dass der Montageclip mittels der Mutter gegen den Unterbau automatisch verschraubbar ist. Zwischen dem Unterbau und dem Montageclip ist ein Ring vorgesehen, der an dem Montageclip verliersicher gehalten oder an diesen angeformt ist. Der Befestigungsbolzen weist eine Einfahrspitze auf.

Damit wird in vorteilhafter Weise erstmals ein Montageclip angeboten, der auch mit einem herkömmlichen, einfachen Standardschraubautomaten vollautomatisch und ohne besonderen Aufwand am Unterbau eines Kraftfahrzeugs befestigt werden kann. Ein versehentliches Verkippen oder Verkanten des Montageclips ist dabei bereits dadurch ausgeschlossen, dass der Befestigungsbolzen, auf den die Mutter aufgeschraubt werden soll, bereits am Unterbau befestigt und damit die Montagerichtung fix vorgegeben ist. Zudem ist es prinzipiell wesentlich einfacher eine Mutter auf einen Bolzen aufzuschrauben, als eine Schraube - auch eine selbstschneidende Blechtreibschraube - permanent senkrecht zu einer Oberfläche zu halten, diese dabei drehend anzutreiben und zugleich unter Druck auf die Oberfläche in diese dann dort hineinzutreiben.

Ein weiterer Vorteil liegt in der Vereinfachung des Montageverfahrens. Denn zur Montage des erfindungsgemäßen Montageclips kann nun ein herkömmlicher Schraubautomat verwendet werden, von dem keine besonderen Voraussetzungen bezüglich der Orientierbarkeit und vor allem an bezüglich der Beweglichkeit dessen Schrauborgans zu erfüllen sind, da sich das Bewegungsmuster des Schrauborgans auf eine näherungsweise stationäre Drehbwegung zum drehenden Antreiben der Mutter auf dem Bolzen reduziert. Die dabei erfolgende Relativbewegung der Mutter axial nach vorne zum Bolzen hin ist relativ gering, so dass diese bereits von der Mutternaufnahme des Schrauborgans kompensiert werden kann. Gleichwohl könnte das Schrauborgan bei Bedarf auch geringfügig nach Vorne auf den Bolzen zu bewegt werden. Eine weitere Vereinfachung gegenüber dem Stand der Technik liegt weiterhin darin, dass keine zusätzliche erhebliche Druckkraft mehr in Richtung des Unterbaus auf das Befestigungsmittel ausgeübt werden muss. Dies ermöglicht eine einfache, schnelle und vollautomatische Montage der Brems- und Kraftstoffleitungen am Unterbau des Kraftfahrzeugs.

Folglich kann bei dem erfindungsgemäßen Montageclip die beim aus der Praxis bekannten Montageclip erforderliche komplexe Bewegung aus einer vorwärts auf den Unterbau hin gerichteten Druckbewegung und einer Rotation der vom Schrauborgan verliersicher gehaltenen Blechtreibschraube reduziert werden zu einer einfachen Rotationsbewegung zum drehenden Antreiben der bereits im erfindungsgemäßen Montageclip verliersicher gehaltenen Mutter, deren Längsbewegung beim Verschrauben mit dem Montagebolzen im Verhältnis zum bekannten Montageclip und der dort verwendeten Blechtreibschraube relativ gering aus und damit nicht ins Gewicht fällt.

Ein weiterer Vorteil gegenüber dem aus der Praxis bekannten Montageclip liegt darin, dass die Mutter mit einer wesentlich geringeren Drehzahl angetrieben und mit einem deutlich geringeren Anzugsdrehmoment angezogen werden kann im Vergleich zu den bei herkömmlichen Blechtreibschrauben erforderlichen hohen Drehzahlen und hohen Anzugsdrehmomenten.

Ferner stellt der erfindungsgemäße Montageclip eine preiswerte Kundendienstlösung dar, da eine De- und Remontage bei Bedarf unter Wiederverwendung der verbauten Teile problemlos ausgeführt werden kann, ohne dass neue Teile zusätzlich gebraucht würden.

Nicht zuletzt kann der Modulträger in vorteilhafter Weise einfacher und damit kostengünstiger ausgestaltet und zudem mit einfacheren Schraubautomaten ausgerüstet werden, was sich wieder positiv durch eine Gesamtkostensenkung bemerkbar macht.

Darüber hinaus kann der erfindungsgemäße Montageclip nicht nur bei herkömmlichen Kraftfahrzeugen sondern auch bei modernen Kraftfahrzeugen jüngster Generation mit beispielsweise aus hochfesten Stählen oder dergleichen Werkstoffen hergestellten besonders steifen bzw. sicheren Unterbaustrukturen verwendet werden.

Des weiteren ergibt sich durch die Verwendung eines Befestigungsbolzens ein funktioneller Vorteil gegenüber der Blechtreibschraube.

Ferner kann beim erfindungsgemäßen Montageclip eine 100%ige Überwachung der Ausführung und Qualität der Montage mit wesentlich einfacheren Mitteln durchgeführt werden, als beim bekannten Montageclip.

Ein weiterer Vorteil liegt in der wesentlichen Kostenreduzierung durch den Wegfall der bei den bekannten herkömmlichen Montageclipsen erforderlichen teuren Messingscheibe.

Weiterhin ist vorgesehen, dass zwischen dem Unterbau und dem Montageclip ein auf den Montagebolzen aufsteckbarer Abstandsring vorgesehen ist, der vorzugsweise aus dem Werkstoff DELRIN 525^{®} hergestellt ist. Dabei ist dieser Abstandsring verliersicher gehalten, wozu der Montageclip auch über eine Ausnehmung in seiner dem Unterbau zugewandten Flanke verfügen kann. Er kann alternativ im Montageclip eingeformt bzw. an diesen angeformt oder in einer weiteren alternativen Ausführungsform in den Montageclip eingespritzt sein. Der Abstandsring kann zur Definition eines vorbestimmten Abstands zwischen Montageclip und Unterbau dienen.

Dabei kann der Abstands- bzw. Zwischenring aus DELRIN 525^{®} dafür sorgen, dass vom Schrauborgan ein vorgegebenes, bestimmtes Anziehdrehmoment auf die Mutter ausgeübt werden kann, wobei mittels des Zwischenrings ein ggf. unerwünschtes Setzverhalten des Montageclips gegenüber dem Unterbau verhindert ist, so dass eine dauerhafte und zuverlässige Haltbarkeit der Befestigung des Montageclips am Unterbau auch nicht durch ein Setzverhalten negativ beeinflusst werden kann.

Der Abstands- bzw. Zwischenring kann zur Stabilisierung der Befestigung des Montageclips am Unterbau dienen und er kann auch zur Vermeidung von Quetschungen oder Druck auf den Montageclip genutzt werden.

Desweiteren ist vorgesehen, dass der Befestigungsbolzen eine Einfahrspitze aufweist. Die Einfahrspitze bietet den zusätzlichen Vorteil, dass bei einer geringen Abweichung der Ist-Position des Montageclips von der Soll-Position für die gewünschte Endmontagelage am Unterbau ein Einfädeln des Montageclips mit dessen Durchgangsöffnung auf den Montagebolzen dennoch möglich ist, und dass beim Ansetzen der im Montageclip verliersicher drehbar gehaltenen Mutter auch diese problemlos auf das am Montagebolzen vorhandene Gewinde aufläuft und dort sofort greift. Damit wird weiterhin vorteilhaft die Fehlertoleranz bei der Montage des erfindungsgemäßen Montageclip erhöht, was wiederum zu einer Vereinfachung des Montageverfahrens führt.

Vorteilhafte Weiterbildungen der Erfindung ergeben sich aus den Merkmalen der Unteransprüche.

So ist bei einer bevorzugten Ausführungsform des Montageclips vorgesehen, dass die Mutter mittels einer radial überstehenden Ringscheibe in einer entsprechend ausgestalteten Ausnehmung im Montageclip verliersicher drehbar gehalten ist. Dies bietet den Vorteil, dass die volle Ausdehnung der Schraubmutter dem Schrauborgan des Schraubautomaten zum sicheren Angreifen verfügbar ist, was die Treffsicherheit erhöht, so dass letztendlich auch die Durchsatzrate des Schraubautomaten wesentlich gesteigert werden kann. Darüber hinaus verbessert sich damit zusätzlich die Lagegenauigkeit der im Montageclip verliersicher drehbar gehaltenen Schraube, so dass im Idealfall vom Schrauborgan keine Lagekorrekturfunktionen geleistet werden müssen.

Gemäss einer weiter bevorzugten Ausführungsform des Montageclips ist vorgesehen, dass der Befestigungsbolzen an den Kraftfahrzeug-Unterbau angeschweisst ist. Das Anschweissen des Befestigungsbolzens ergibt funktionelle wie auch mechanische Vorteile. Insbesondere ergibt sich eine vereinfachte, zuverlässige und kostengünstige Befestigungsmöglichkeit des Bolzens am Unterbau, wobei damit im Vergleich zu herkömmlichen Blechtreibschrauben wesentlich größere Kräfte übertragen werden können, so dass bei vergleichbaren Kräften beim erfindungsgemäßen Montageclip der Montagebolzen und die Mutter entsprechend kleiner bzw. schlanker und damit preiswerter ausfallen können. Alternativ zum Verschweissen könnte man den Montagebolzen auch am Unterbau einstückig anformen oder auch in den Unterbau einschrauben oder an diesem ankleben.

In einer weiter bevorzugten Ausführungsform ist vorgesehen, dass der Befestigungsbolzen aus normalfestem Stahl, vorzugsweise aus QS 1010 FO oder SAE 1008/1010 oder dergleichen Stählen hergestellt ist. Damit können kostengünstige Stähle als Material für den Bolzen Verwendung finden, so dass damit wiederum ein Kostensenkungsbeitrag geleistet wird. Alternativ können bei Bedarf auch hochfeste Stähle als Material für den Bolzen Verwendung finden. Diese bieten dann einerseits den Vorteil, dass diese rostfrei, zäh und damit unverwüstlich sind und zum anderen bieten sie den Vorteil, dass sie besonders grosse Kräfte übertragen können, wenn dies erforderlich sein sollte. Die Mutter kann unabhängig vom Bolzen beispielsweise aus einem Federbandstahl hergestellt sein.

In einer weiter bevorzugten Ausführungsform des Montageclips ist der Abstandsring aus DELRIN 525^{®} derart im Montageclip integriert, dass ein im Kunststoffspritzgußverfahren herstellbares Zwei-Komponenten-Bauteil entsteht.

In einer weiter bevorzugten Ausführungsform ist vorgesehen, dass der Montageclip aus Kunststoff, vorzugsweise aus einem Polyacetalhomopolymer, wie beispielsweise POM QK 000354 oder POM QK 000358 oder dergleichen, hergestellt ist. Kunststoff ist ein preiswerter Werkstoff, der beispielsweise durch Spritzguss- oder Schmelzformverfahren in jede gewünschte Form und Geometrie, auch in jede komplexe Form gebracht werden kann, so dass der erfindungsgemäße Montageclip trotz seiner aufwendigen Ausgestaltung kostengünstig herstellbar ist. Dabei kann der verwendete Kunststoff je nach Anwendungsfall und Fahrzeugtyp entsprechend den gewünschten Temperatur- und/oder Festigkeitsbereichen ausgewählt werden.

In einer weiter bevorzugten Ausführungsform ist vorgesehen, dass der Montageclip zusammen mit den darin gehaltenen Leitungen auf einem Modulträger anordnenbar und dort in seiner Position relativ zu einem benachbarten Montageclip zeitweilig fixierbar gehalten ist. Dabei soll eine Mehrzahl von Montageclips mit dem Modulträger gegen den Unterbau führbar sein. Diese Mehrzahl der Montageclips, die auf dem Modulträger gehalten sind, sollen mit diesem auf den jeweiligen Montagebolzen aufsteckbar und die Mutter dann mittels eines Schraubautomaten gegen den Montagebolzen anziehbar sein.

Dies bietet den großen Vorteil, dass die Montageclipse bereits vordefiniert in Bezug auf deren abschließende endgültige Position am Unterbau auf dem Modulträger angeordnet werden können. Der Modulträger bietet dabei nicht nur den Vorteil, dass er die gewünschten Positionen sichert, sondern er hält auch die auf ihm angeordneten Montageclipse fest, so dass die Leitungsbündel problemlos in die in den Montageclipsen vorhandenen Ausnehmungen eingeführt und dort verankert bzw. eingerastet werden können. Sobald dann das komplette Leitungsbündel in allen Montageclipsen verankert ist und damit der Brems- und/oder Kraftstoffleitungsbaum komplettiert ist, kann dieses Leitungsbündel mit der Vielzahl der Montageclipse mittels des Modulträgers als komplette vormontierte Einheit gegen den Kraftfahrzeugunterbau geführt und über die Vielzahl der korrespondierenden Montagebolzen zielsicher aufgesteckt werden. Im Anschluss kann dann ein Schraubautomat mit dessen Schrauborgan die Muttern in den jeweiligen Mohtageclipsen auf die jeweiligen Montagebolzen aufschrauben und damit das komplette Leitungsbündel fest am Unterbau verankern.

Die vorstehend diskutierte Aufgabe wird in verfahrenstechnischer Hinsicht gelöst durch die Merkmale des Anspruchs 9.

Dabei wird ein Verfahren zur Montage von z.B. in Bündeln vorliegenden Leitungen, wie beispielsweise Bremsleitungen, Kraftstoffleitungen oder dergleichen, am Unterbau eines Kraftfahrzeugs, insbesondere eines Personenkraftwagens, vorgeschlagen. Dabei sollen Montageclips mit Ausnehmungen zur Aufnahme der Leitungen und mit einer Durchgangsöffnung zum Verschrauben der Montageclips mit einem Befestigungsmittel am Unterbau des Kraftfahrzeugs Verwendung finden. Hierbei soll in einem ersten Montageschritt die Leitungen in den Montageclips eingeclipst und der Montageclip mit den darin gehaltenen Leitungen auf ein Modulträger positioniert werden, der die Mehrzahl der Montageclipse für die Dauer deren Montage am Unterbau relativ zueinander fix positioniert hält. Ferner soll in einem zweiten Montageschritt der Modulträger mit den dort gehaltenen Montageclipsen und den darin gehaltenen Leitungsbündeln derart gegen den Unterbau des Kraftfahrzeugs geführt werden, dass die Montageclipse jeweils exakt an der vorbestimmten Position am Unterbau anstehen.

Dabei ist erstmals vorgesehen, dass die Montageclipse beim Annähern an den Unterbau mit der in den Montageclipsen jeweils vorhandenen Durchgangsöffnung auf einen am Unterbau befestigten, jeweils zugeordneten Montagebolzen, der einen Gewindeabschnitt aufweist, aufgesteckt werden. Ferner ist dabei erstmals vorgesehen, dass die Montageclipse jeweils eine darin verliersicher drehbar gehaltene Mutter aufweisen, mittels der die Montageclipse jeweils am Montagebolzen fest gegen den Unterbau automatisch verschraubt werden.

Dies bietet den Vorteil, dass die häufig komplex gestaltenen Bremsleitungs- und/oder Kraftstoffleitungsbündel mit den erfindungsgemäßen Montageclipsen mittels dem hier diskutierten Montageverfahren kostengünstig, einfach, zuverlässig und schnell, korrekt und sauber am Unterbau eines Kraftfahrzeugs befestigt werden können. Dabei kann das Montageverfahren in der laufenden Produktion am laufenden Montageband ausgeführt werden, so dass keinerlei Verzögerungen durch die Montage der Leitungsbündel auftreten. Darüber hinaus können beim erfindungsgemäßen Montageverfahren einfache Schraubautomaten zum Einsatz gelangen, die nicht in der Lage sein müssen, eine komplexe Kombination aus Halte-, Vorschub- und Drehbewegungen auszuführen. Ferner bietet das erfindungsgemäße Verfahren den Vorteil einer Kostenreduzierung gegenüber den herkömmlichen Verfahren. Zudem sind damit voll automatische Montageprozesse realisierbar, so dass auf entsprechendes Personal verzichtet werden kann, was die hohen Personalkosten dämpfen hilft. Nicht zuletzt bietet das erfindungsgemäße Verfahren den Vorteil einer 100%igen Überwachbarkeit, so dass sowohl die Ausführung der Befestigung als auch die Qualität derselben jederzeit kontrolliert und protokolliert werden kann.

Die vorstehend diskutierte Erfindung wird nachfolgend unter Bezugnahme auf zwei Ausführungsbeispiele anhand der Figuren der Zeichnungen näher erläutert. Es zeigt:
- Fig. 1: eine schematisch vereinfachte Darstellung einer ersten beispielhaften Ausführungsform eines erfindungsgemäßen Montageclipses; und
- Fig. 2: eine schematisch vereinfachte Darstellung einer zweiten beispielhaften Ausführungsform eines erfindungsgemäßen Montageclipses; und
- Fig. 3: eine schematisch vereinfachte Teilschnittdarstellung durch den in Fig. 2 gezeigten Montageclip mit integriertem DELRIN 525® Ring; und
- Fig. 4: eine schematisch vereinfachte Darstellung des aus der Praxis bekannten Montageclips.

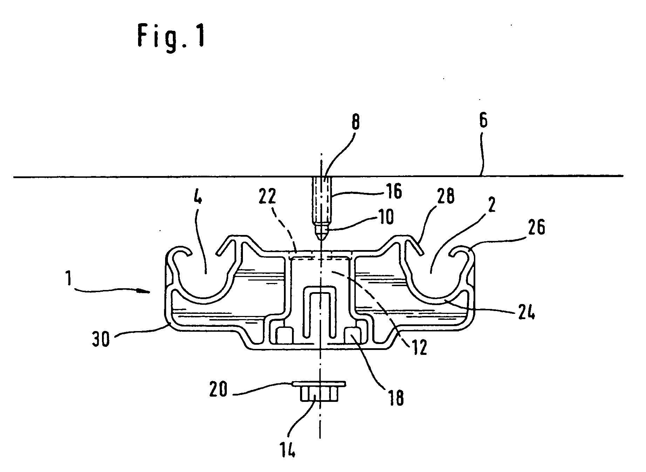

Die in Fig. 1 gezeigte beispielhafte Ausführungsform eines erfindungsgemäßen Montageclips 1 verfügt über Ausnehmungen 2 und 4 für Leitungen. Die Ausnehmungen 2 bzw. 4 sind in der hier gezeigten Ausführungsform im wesentlichen "U"-förmig ausgebildet und weisen mit ihrer offenen Seite zum Unterbau 6 des Kraftfahrzeugs hin. Der lichte Durchmesser des näherungsweise kreisförmigen Abschnitts der Ausnehmung 2 bzw. 4 entspricht im wesentlichen dem Aussendurchmesser der in die entsprechende Ausnehmung 2 bzw. 4 einzurastenden Leitung. Der Montageclip 1 kann eine beliebige Anzahl von Ausnehmungen aufweisen. Die Ausnehmungen können auch andere Querschnitte aufweisen, beispielsweise derart gestaltet sein, dass zwei Leitungen nebeneinander oder etwas versetzt hintereinander in eine Ausnehmung eingerastet werden können.

Am Unterbau 6 ist ein Montagebolzen 8 befestigt. Der Montagebolzen 8 kann beispielsweise am Unterbau 6 angeschweisst sein. Er kann aber auch dort eingeschraubt oder angeklebt sein. Der Montagebolzen 8 weist eine Einfahrspitze bzw. Zentrierhilfe 10 auf. Damit soll der Montageclip 1 mit dessen Durchgangsöffnung 12 leichter bzw. einfacher auf den Montagebolzen 8 aufsteckbar sein. Die Zentrierhilfe bzw. Einfahrspitze 10 dient auch dazu, dass eine im Montageclip verliersicher drehbar gehaltene Mutter 14 leichter bzw. einfacher auf den Montagebolzen 8 aufgeschraubt werden kann. Der Montagebolzen 8 weist hierfür einen Gewindeabschnitt 16 auf.

Um die Mutter 14 im Montageclip 1 möglichst verliersicher drehbar halten zu können, weist der Montageclip 1 eine hierfür geeignete Aufnahme 18 auf. Die Aufnahme bzw. Aussparung 18 für die Mutter 14 kann zusätzlich über hier nicht näher dargestellte Nasen, Schultern oder Krägen aufweisen, die mit einem an der Mutter 14 angeformten, radial nach aussen überstehenden Stützring 20 zusammen wirken können, so dass sich die Mutter 14 mit dem Stützring 20 gegen die Nasen in der Ausnehmung 18 abstützen kann und ein unerwünschtes Herausfallen der Mutter 14 aus der Aufnahme 18 noch wirkungsvoller verhindert wird.

Zwischen dem Montageclip 1 und dem Unterbau 6 ist ein hier nicht im Detail gezeigter Abstandsring 22 auf den Montagebolzen 8 aufgesteckt. Der Abstandsring 22 kann dabei bevorzugt im Montageclip in der Weise integriert sein, dass der Abstandsring 22 beispielsweise aus dem Material DELRIN 525® in den Montageclip 1 integriert bzw. eingespritzt ist.

Der Montagebolzen 8 ist im wesentlichen senkrecht auf dem Unterbau 6 befestigt. Der Montageclip 1 erstreckt sich dabei entlang seiner grösseren Erstreckungsrichtung parallel zum Unterbau 6 und die Durchgangsöffnung 12 des Montageclips 1 erstreckt sich somit im wesentlichen senkrecht zum Unterbau 6, also parallel bzw. koaxial zum Montagebolzen 8.

Die Ausnehmungen 2 und 4 zur Aufnahme der Leitungen (letztere sind hier nicht näher dargestellt) sind in deren Grund 24 kreisbogenabschnittförmig ausgebildet und verfügen über Rückhaltenasen bzw. Rückhaltekrägen 26 bzw. 28, die beispielsweise geradlinig oder gebogen ausgebildet sein können. Die Rückhaltenasen 26 bzw. 28 sorgen dafür, dass einmal eingerastete Leitungen nicht mehr unbeabsichtigt aus den Ausnehmungen 2 bzw. 4 heraus gleiten können.

Der Montageclip 1 weist ferner Verstärkungsrippen 30 auf zur mechanischen Stabilisierung des Montageclips 1.

Der Montageclip 1 ist aus Kunststoff hergestellt. Der Montagebolzen 8 wiederum ist aus einem hochfesten Stahl hergestellt und am Unterbau 6 verschweisst. Die Mutter 14 ist als herkömmliche Mutter beispielsweise aus Stahl mit einem am Rand angeformten umlaufenden ringförmigen Stützkragen 20 aus dem selben Material ausgebildet. Der Montageclip 1 weist an dessen den Unterbau 6 zugewandten Bereich einen integrierten Abstandsring 22 aus DELRIN 525® auf.

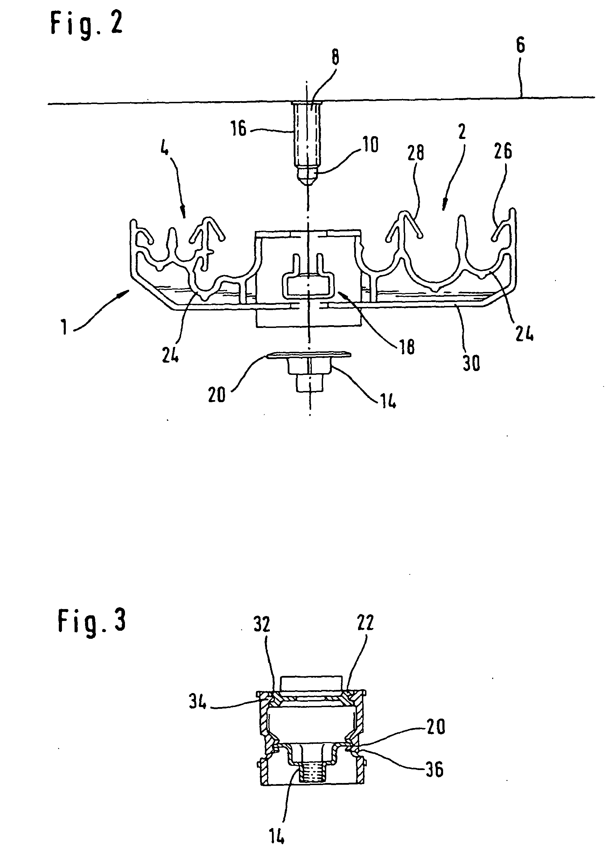

In Fig. 2 und 3 ist eine weitere beispielhafte Ausführungsform eines erfindungsgemäßen Montageclipses 1 gezeigt. Gleiche oder gleichwirkende Bauteile sind dabei zur Vereinfachung der Beschreibung mit den selben Bezugszeichen versehen. Anhand des in Fig. 3 gezeigten Schnittbildes durch den mittleren Bereich des in Fig. 2 gezeigten Montageclipses wird deutlich, wie der Abstands- bzw. Stützring 22 aus DELRIN 525® im Montageclip 1 integriert ist und wie die Mutter 14 beispielsweise verliersicher drehbar gehalten sein kann.

Der Ring 22 weist an seinem äusseren Umfang eine umlaufende Einschnürung oder Ausnehmung 32 auf, in die eine im Montageclip entsprechend angeformte ringförmig umlaufende Nase oder Schulter 34 eingreift, so dass der Ring 22 im Montageclip 1 gehalten ist. Die Mutter 14 ist über deren schirm- bzw. tellerartigen Ring bzw. Kragen 20 in im Montageclip 1 vorhandenen ringförmig umlaufenden Ausnehmungen oder Schultern 36 verliersicher drehbar gehalten. Die Mutter 14 ist bei der hier gezeigten Ausführungsform aus einem Federbandstahl hergestellt. Der Montageclip 1 ist aus einem Kunststoff, wie beispielsweise POM QK 000354 bzw. 358 oder dergleichen erzeugt. Der Bolzen 8 besteht aus einem handelsüblichen Stahl, wie beispielsweise QS 1010 FO oder SAE 1008/1010.

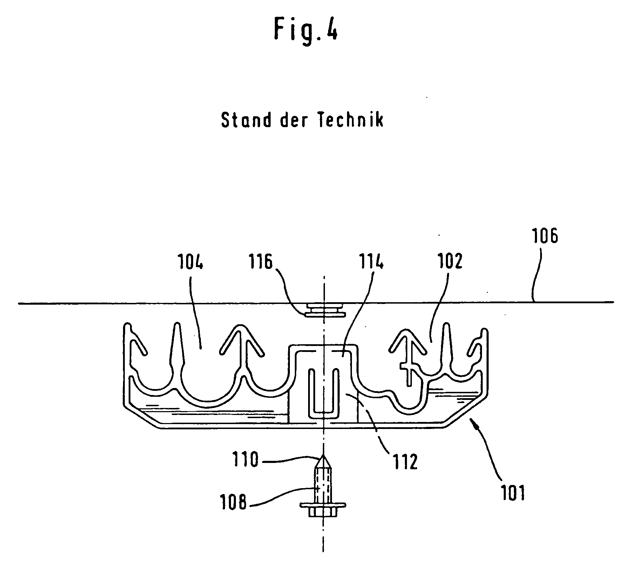

In Fig. 4 ist der aus der Praxis bekannte Montageclip 101 gezeigt. Der bekannte Montageclip 101 weist Ausnehmungen 102 und 104 für Leitungen auf, in welche Bremsleitungen oder Kraftstoffleitungen eingeclipst werden können. Die Ausnehmungen 102 und 104 sind "U"-förmig ausgebildet und in montiertem Zustand gegen den Unterbau 106 eines Kraftfahrzeugs gerichtet. Der Montageclip 101 wird mit einer selbstschneidenden und selbstzentrierenden Blechtreibschraube 108 in den Unterbau 106 verschraubt. Die Blechtreibschraube 108 weist hierfür eine selbstzentrierende und ein Gewinde ins Blech schneidende Schneidspitze 110 auf. Im Montageclip 101 ist eine Durchgangsöffnung 112 vorgesehen, durch welche die Blechtreibschraube 108 hindurch in den Unterbau 106 getrieben werden kann. Dabei wird die Blechtreibschraube 108 bis in den Montageclip an dessen dem Unterbau zugewandten Bereich 114 hinein geschraubt. Zwischen dem Montageclip 101 und dem Unterbau 106 ist ein Abstandsring 116 aus teurem Messing angeordnet. Damit die Blechtreibschraube 108 beim Verschrauben gegen den Unterbau 106 nicht Verkantet oder Verkippt, muss diese vom Schrauborgan des Schraubautomaten kompliziert geführt und stabilisiert werden. Dies bedeutet einen erheblichen Aufwand im Vergleich zu der vorstehend diskutierten Erfindung.

### Bezugszeichenliste

Fig.1 (Erfindung)
   - 1: Montageclip
   - 2: Ausnehmung für Leitung
   - 4: Ausnehmung für Leitung
   - 6: Unterbau
   - 8: Montagebolzen
   - 10: Einfahrspitze bzw. Zentrierhilfe
   - 12: Durchgangsöffnung
   - 14: Mutter
   - 16: Gewindeabschnitt des Bolzens
   - 18: Ausnehmung bzw. Aufnahme für Mutter
   - 20: ringförmiger Kragen bzw. Stützring
   - 22: Abstandsring
   - 24: Grund der Ausnehmung 2 bzw. 4
   - 26: Rückhaltegranne, bogenförmig
   - 28: Rückhaltegranne, geradlinig
   - 30: Verstärkungsrippe
   - 32: ringförmige Einschnürung bzw. Ausnehmung
   - 34: ringförmige Nase
   - 36: ringförmige Schulter für Kragen 20
Fig. 2 (Stand der Technik)
   - 101: Montageclip
   - 102: Ausnehmung für Leitung
   - 104: Ausnehmung für Leitung
   - 106: Unterbau
   - 108: selbstschneidende Blechtreibschraube
   - 110: Schneidspitze der Schraube 108
   - 112: Durchgangsöffnung
   - 114: dem Unterbau zugewandter Bereich von 112
   - 116: Abstandsring aus Messing

## Patentansprüche

1. Montageclip (1) zur Befestigung von, vorzugsweise im Bündel vorliegenden, Leitungen, wie beispielsweise Bremsleitungen, Kraftstoffleitungen, oder dergleichen, an einem Unterbau (6) eines Kraftfahrzeugs, insbesondere eines Personenkraftwagens, mit Ausnehmungen (2; 4) zur Aufnahme der Leitungen und mit einer Durchgangsöffnung (12) zum Verschrauben des Montageclips (1) mit einem Befestigungsmittel (8; 14) am Unterbau (6) des Kraftfahrzeugs, wobei das Befestigungsmittel (8; 14) zweiteilig ausgebildet ist mit einer Mutter (14) und einem Befestigungsbolzen (8) mit Gewindeabschnitt (16), und wobei der Befestigungsbolzen (8) am Kraftfahrzeug-Unterbau (6) derart befestigbar ist, dass der Montageclip (1) mit dessen Durchgangsöffnung (12) auf den Befestigungsbolzen (8) aufsteckbar ist wobei die Mutter (14) im Montageclip (1) verliersicher drehbar gehalten ist, **dadurch gekennzeichnet, dass** der Montageclip (1) mittels der Mutter (14) gegen den Unterbau (6) automatisch verschraubbar ist, wobei zwischen dem Unterbau (6) und dem Montageclip (1) ein Ring (22) vorgesehen ist, der an dem Montageclip (1) verliersicher gehalten oder an diesen angeformt ist, wobei der Befestigungsbolzen (8) eine Einfahrspitze (10) aufweist.

2. Montageclip (1) nach Anspruch 1, **dadurch gekennzeichnet, dass** die Mutter (14) eine radial überstehende Ringscheibe (20) aufweist, mittels derer die Mutter (14) in einer entsprechend ausgestalteten Ausnehmung (18, 36) im Montageclip (1) verliersicher drehbar gehalten ist.

3. Montageclip (1) nach einem der Ansprüche 1 bis 2, **dadurch gekennzeichnet, dass** der Befestigungsbolzen (8) an den Unterbau (6) angeschweisst ist.

4. Montageclip (1) nach einem der Ansprüche 1 bis 3, **dadurch gekennzeichnet, dass** der Befestigungsbolzen (8) aus normalem Stahl, vorzugsweise aus QS 1010 FO oder SAE 1008/1010, und/oder die Mutter (14) aus einem Federbandstahl hergestellt ist.

5. Montageclip (1) nach einem der Ansprüche 1 bis 4, **dadurch gekennzeichnet, dass** der Ring (22) in den Montageclip (1) integriert ist.

6. Montageclip (1) nach einem der Ansprüche 1 bis 5, **dadurch gekennzeichnet, dass** der Montageclip (1) aus Kunststoff hergestellt ist.

7. Montageclip (1) nach einem der Ansprüche 1 bis 6, **dadurch gekennzeichnet, dass** der Montageclip (1) zusammen mit den darin gehaltenen Leitungen auf einem Modulträger anordnenbar und dort in seiner Position relativ zu einem benachbarten Montageclip (1) zeitweilig fixierbar ist, wobei eine Mehrzahl von Montageclips (1) mit dem Modulträger gegen den Unterbau (6) führbar, auf den Montagebolzen (8) aufsteckbar und die Mutter (14) mittels eines Schraubautomaten gegen den Montagebolzen (8) anziehbar ist.

8. Verfahren zur Montage von, vorzugsweise in Bündeln vorliegenden, Leitungen, wie beispielsweise Bremsleitungen, Kraftstoffleitungen, oder dergleichen, an einem Unterbau (6) eines Kraftfahrzeugs, insbesondere eines Personenkraftwagens, unter Verwendung eines Montageclips (1) gemäß einem der Ansprüche 1 bis 7, wobei
in einem ersten Montageschritt die Leitungen in den Montageclips (1) eingeklippst und der Montageclip (1) mit den darin gehaltenen Leitungen auf einem Modulträger positioniert wird, der die Mehrzahl der Montageclipse (1) für die Dauer deren Montage am Unterbau (6) relativ zu einander fix positioniert hält, und wobei
in einem zweiten Montageschritt der Modulträger mit den dort gehaltenen Montageclipsen (1) und den darin gehaltenen Leitungsbündeln derart gegen den Unterbau (6) des Kraftfahrzeugs geführt wird, dass die Montageclipse (1) jeweils exakt an der vorbestimmten Position am Unterbau (6) anstehen,
wobei
die Montageclipse (1) beim Annähern an den Unterbau (6) mit der in den Montageclipsen (1) jeweils vorhandenen Durchgängsöffnung (12) auf einen am Unterbau (6) befestigten, jeweils zugeordneten Montagebolzen (8), der einen Gewindeabschnitt (10) aufweist, aufgesteckt werden, und
die Montageclipse (1) fest gegen den Unterbau (6) automatisch verschraubt werden.

## Claims

1. A mounting clip (1) for fastening lines preferably present in bundles such as brake lines, fuel lines or the like to an undercarriage (6) of a motor vehicle, especially a passenger car, comprising recesses (2; 4) for accommodating the lines and a through-opening (12) for screwing the mounting clip (1) together with a fastening means (8; 14) on the undercarriage (6) of the motor vehicle, with the fastening means (8; 14) being arranged in two parts with a nut (14) and a fastening bolt (8) with a threaded section (16), and the fastening bolt (8) being fastenable to the undercarriage (6) of the motor vehicle in such a way that the mounting clip (1) can be placed with its through-opening (12) on the fastening bolt (8), with the nut (14) being twistably held in the mounting clip (1) in a captive manner, **characterized in that** the mounting clip (1) can automatically be screwed by means of the nut (14) against the undercarriage (6), with a ring (22) being provided between the undercarriage (6) and the mounting clip (1), which ring (22) is captively held on the mounting clip (1) or is formed on the same, with the fastening bolt (8) having an insertion tip (10).

2. A mounting clip (1) according to claim 1, **characterized in that** the nut (14) comprises a radially protruding annular disk (20), by means of which the nut (14) is captively rotatably held in a respectively arranged recess (18, 36) in the mounting clip (1).

3. A mounting clip (1) according to one of the claims 1 to 2, **characterized in that** the fastening bolt (8) is welded on to the undercarriage (6).

4. A mounting clip (1) according to one of the claims 1 to 3, **characterized in that** the fastening bolt (8) is made of normal steel, preferably QS 1010 FO or SAE 1008/1010, and/or the nut (14) is made of a spring band steel.

5. A mounting clip (1) according to one of the claims 1 to 4, **characterized in that** the ring (22) is integrated in the mounting clip (1).

6. A mounting clip (1) according to one of the claims 1 to 5, **characterized in that** the mounting clip (1) is made of plastic.

7. A mounting clip (1) according to one of the claims 1 to 6, **characterized in that** the mounting clip (1) can be arranged on a module carrier together with the lines held therein and can be fixed there temporarily in its position relative to an adjacent mounting clip (1), wherein a plurality of mounting clips (1) can be guided with the module carrier against the undercarriage (6) and can be inserted on the mounting bolt (8), and the nut (14) can be tightened by means of an automatic screwdriver against the mounting bolt (8).

8. A method for mounting lines preferably present in bundles such as brake lines, fuel lines or the like on an undercarriage (6) of a motor vehicle, especially a passenger car, by using a mounting clip (1) according to one of the claims 1 to 7, wherein the lines are clipped into the mounting clip (1) in a first mounting step and the mounting clip (1) with the lines held therein is positioned on a module carrier which holds the plurality of mounting clips (1) in a fixedly positioned manner relative to one another on the undercarriage (6) for the duration of their mounting, and wherein in a second mounting step the module carrier with the mounting clips (1) held there and the line bundles held therein are guided in such a way against the undercarriage (6) of the motor vehicle that the mounting clips (1) will be positioned precisely at the predetermined position on the undercarriage (6), wherein the mounting clips (1), upon approaching the undercarriage (6), are inserted with the through-opening (12) respectively present in the mounting clips (1) on a respectively associated mounting bolt (8) which is fastened to the undercarriage (6) and comprises a threaded section (10), and the mounting clips (1) are automatically tightly screwed against the undercarriage (6).

## Revendications

1. Clip de montage (1) pour la fixation de conduites se présentant de préférence sous forme de faisceaux, par exemple de conduites de frein, de conduites de carburant ou similaires, sur un bas de caisse (6) d'un véhicule à moteur, en particulier d'une voiture, avec des évidements (2; 4) pour recevoir les conduites et avec une ouverture traversante (12) pour le vissage du clip de montage (1) avec un moyen de fixation (8; 14) sur le bas de caisse (6) du véhicule à moteur, dans lequel le moyen de fixation (8; 14) est conçu en deux parties avec un écrou (14) et un boulon de fixation (8) avec une section filetée (16), et dans lequel le boulon de fixation (8) peut être fixé au bas de caisse du véhicule (6) de telle façon que le clip de montage (1) puisse être enfilé avec son ouverture traversante (12) sur le boulon de fixation (8) et dans lequel l'écrou (14) est retenu dans le clip de montage (1) de façon imperdable et avec possibilité de rotation, **caractérisé en ce que** le clip de montage (1) peut être vissé automatiquement au moyen de l'écrou (14) contre le bas de caisse (6), une bague (22) étant prévue entre le bas de caisse (6) et le clip de montage (1), qui est retenue de façon imperdable sur le clip de montage (1) ou formée d'un seul tenant sur celui-ci, le boulon de fixation (8) présentant une pointe d'introduction (10).

2. Clip de montage (1) selon la revendication 1, **caractérisé en ce que** l'écrou (14) présente une rondelle annulaire (20) en saillie dans le sens radial, au moyen de laquelle l'écrou (14) est retenu de façon imperdable et avec possibilité de rotation dans un évidement (18, 36) de forme correspondante du clip de montage (1).

3. Clip de montage (1) selon l'une des revendications 1 à 2, **caractérisé en ce que** le boulon de fixation (8) est soudé sous le bas de caisse (6).

4. Clip de montage (1) selon l'une des revendications 1 à 3, **caractérisé en ce que** le boulon de fixation (8) est fabriqué en acier normalisé, de préférence en QS 1010 FO ou SAE 1008/1010, et/ou l'écrou (14) en acier en feuillard pour ressorts.

5. Clip de montage (1) selon l'une des revendications 1 à 4, **caractérisé en ce que** la bague (22) est intégrée dans le clip de montage (1).

6. Clip de montage (1) selon l'une des revendications 1 à 5, **caractérisé en ce que** le clip de montage (1) est fabriqué en matière plastique.

7. Clip de montage (1) selon l'une des revendications 1 à 6, **caractérisé en ce que** le clip de montage (1) peut être disposé avec les conduites qu'il retient sur un support de module et peut y être fixé temporairement dans sa position par rapport à un clip de montage (1) voisin, une pluralité de clips de montage (1) pouvant être amenée avec le support de module contre le bas de caisse (6) et enfilée sur le boulon de montage (8) et l'écrou (14) pouvant être serré au moyen d'une visseuse automatique contre le boulon de montage (8).

8. Procédé pour le montage de conduites se présentant de préférence sous forme de faisceaux, par exemple de conduites de frein, de conduites de carburant ou similaires, sur un bas de caisse (6) d'un véhicule à moteur, en particulier d'une voiture, en utilisant un clip de montage (1) selon l'une des revendications 1 à 7, dans lequel, dans une première étape de montage, les conduites sont clipsées dans les clips de montage (1) et le clip de montage (1) avec les conduites qu'il retient est positionné sur un support de module qui retient la pluralité de clips de montage (1) dans une position fixe les uns par rapport aux autres pour la durée de leur montage sur le bas de caisse (6), et dans lequel dans une deuxième étape de montage, le support de module avec les clips de montage (1) qui y sont retenus et les faisceaux de conduites qui sont retenues dans ceux-ci est amené contre le bas de caisse (6) du véhicule à moteur de telle façon que les clips de montage (1) se trouvent chacun exactement dans la position prédéterminée sur le bas de caisse (6),
les clips de montage (1) étant enfilés à l'approche du bas de caisse (6), avec l'ouverture traversante (12) présente sur chaque clip de montage (1), sur un boulon de montage (8) correspondant fixé au bas de caisse (6) associé à chacun, qui présente une section filetée (10), et les clips de montages (1) sont vissés automatiquement et fixés contre le bas de caisse (6).
